# EUROPÄISCHE PATENTSCHRIFT

(11) **EP 0 633 415 B1**
(45) Veröffentlichungstag und Bekanntmachung des Hinweises auf die Patenterteilung: **03.07.1996**
(21) Anmeldenummer: 94107339.7
(22) Anmeldetag: 11.05.1994
(51) Int. Cl.: F16K 31/06

(54) **Elektromagnetisches Umschaltventil**
Electromagnetic switch valve
Soupape électromagnétique d'inversion

(30) Priorität: 07.07.1993 DE 4322564
(43) Veröffentlichungstag der Anmeldung: 11.01.1995
(73) Patentinhaber: PIERBURG GMBH, D-41460 Neuss (DE)
(72) Erfinder: Krause, Harald, D-41516 Grevenbroich (DE)

(56) Entgegenhaltungen:
- DE-A- 3 310 997
- DE-A- 3 416 336
- DE-A- 3 716 072

## Beschreibung

### Elektromagnetisches Umschaltventil

Die Erfindung betrifft ein elektromagnetisches Umschaltventil nach dem Oberbegriff des Patentanspruchs 1. Ein derartiges Umschaltventil ist aus der DE-A1-3310997 bekannt.

Das nicht gattungsgemäße Umschaltventil der DE-A1 34 16 336 weist ebenfalls zwei gegenüberliegende Ventilsitze auf, zwischen denen ein mit an seinen Stirnseiten angeordneten Dichtkörpern versehener Anker hin- und herbewegbar ist.

In der dem Anker zugewandten Wandung eines Ankerführungsrohres sind in Längsrichtung verlaufende Ausnehmungen angeordnet, die zur Verbindung der beiden Ventilsitzkammern dienen. Die die Ausnehmungen begrenzenden Erhöhungen des Ankerführungsrohres dienen der Ankerführung.

Aus der DE-A1 37 16 072 ist ein nicht gattungsgemäßes elektromagnetisch betätigtes Ventil bekannt, bei dem ein Anker mit einem Ventilschließteil ausgebildet ist, wobei letzteres in einer Führungsbohrung bewegt wird, die von einem Fluid durchströmt wird. Hierfür weist das aus einem zylindrischen Grundkörper gebildete Ventilschließteil äußere Abflachungen auf, die Durchlässe für das Fluid bilden.

Aus der DE-A1 33 10 997 ist ein Magnetventil bekannt, mit einem Magnetanker und einem Ventilelement, das mit zwei Ventilsitzen zusammenwirkt und innerhalb des Magnetankers Durchgangsöffnungen für das zu steuernde Fluid bildet. Der Magnetanker und eine Magnetschlußhülse, in der der Magnetanker geführt ist, weisen in etwa eine gleiche Länge auf. Bei bestromter Magnetspule wird bei diesem Magnetventil der Anker innerhalb der Magnetschlußhülse radial abgestüzt. Darüber hinaus weist der Magnetanker eine große Masse auf.

Bei elektromagnetischen Umschaltventilen besteht das Problem, den Widerstand des magnetischen Kreises, bestehend aus Joch, Polrohr und Anker möglichst gering zu halten, d. h. die eisenfreien Abstände zwischen den genannten Bauteilen.

Dem steht die aus der DE-A 34 16 336 bekannte Anordnung entgegen, da die in Längsrichtung des Ankerführungsrohres verlaufenden Ausnehmungen einen eisenfreien Spalt bilden. Auch die aus der DE-A1 37 16 072 bekannte Ausführung mit Abflachungen zur Bildung von Durchlässen würde bei Übertragung auf einen gattungsgemäßen Gegenstand den eisenfreien Spalt zwischen Anker und Rolrohr vergrößern.

Hiervon ausgehend liegt der Erfindung die Aufgabe zugrunde, Maßnahmen aufzufinden, mit denen eisenfreie Spalte im magnetischen Kreis bei einem gattungsgemäßen Umschaltventil gegenüber dem Stand der Technik wesentlich verringert werden kann.

Diese Aufgabe ist durch die im Anspruch 1 angegebenen kennzeichnenden Merkmale gelöst worden.

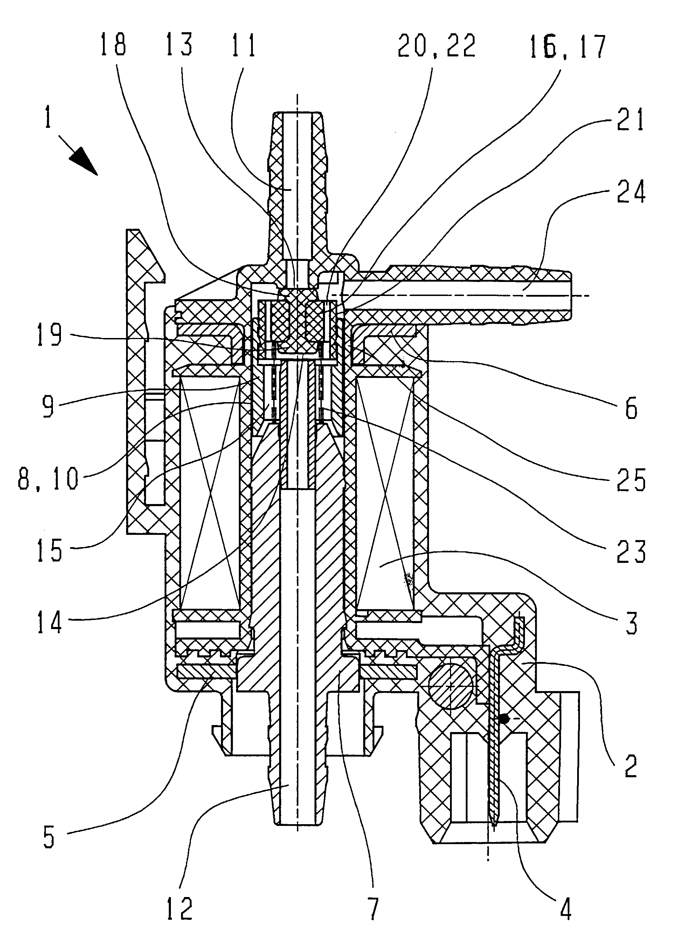

Erreichbare Vorteile werden nachfolgend anhand eines beschriebenen Ausführungsbeispiels genannt, das in der Zeichnung dargestellt ist.

Diese zeigt einen Längsschnitt durch ein elektromagnetisches Umschaltventil 1, bestehend aus einem Kunststoffgehäuse 2 mit einer eingespritzten Magnetspule 3 und elektrischen Anschlüssen 4 sowie einem aus Joch 5, ein mit diesem verbundenes Polrohr 6 und Ankerkern 7 gebildeten Magnetkreis, in dessen eisenfreiem Spalt 8 ein Anker 9 beweglich angeordnet ist. Der Anker 9 ist in einem Durchlaßkanal 10 angeordnet, der zwischen zwei Fluidanschlußkanälen 11, 12 besteht, deren Öffnungen jeweils einen Ventilsitz 13, 14 bilden. Der Magnetanker 9 und der Durchlaßkanal 10 sind durchmessermäßig so aufeinander abgestimmt, daß zwischen ihnen nur ein minimaler Spalt besteht. Der Anker 9 weist eine in Längsrichtung verlaufende Ausnehmung 15 auf, in die ein Kunststoffkörper 16 eingesetzt ist, der ein Mittelteil 17 mit an beiden Stirnflächen herausragenden Elastomerdichtkörpern 18, 19 aufweist, wobei das Mittelteil 17 durch Rippen 20 mit einem Außenteil 21 verbunden ist, so daß zwischen Mittelteil 17 und Außenteil 21 Durchlässe 22 bestehen.

Zwischen Mittelteil 17 und Ankerkern 7, der den einen Anschlußkanal 12 aufweist, ist eine Feder 23 eingespannt, durch die der Anker 9 gegen den Ventilsitz 13 des anderen Anschlußkanals 11 belastet ist. Der Durchlaßkanal 10 ist mit einem dritten Anschlußkanal 24 verbunden. Je nach dem, ob die Magnetspule 3 bestromt ist oder nicht, ist der Anschlußkanal 11 mit dem Anschlußkanal 24 verbunden und der Anschlußkanal 12 verschlossen oder der Anschlußkanal 12 mit dem Anschlußkanal 24 und der andere verschlossen (wie dargestellt).

Zwischen dem Polrohr 6 und dem Anker 9 besteht nur ein äußerst geringer eisenfreier Spalt, der durch den Einbauspalt zwischen Anker 9 und Durchlaßkanal 10 und einer Zwischenwand 25 des Kunststoffgehäuses 2 in diesem Bereich gebildet ist. Durch diesen geringen eisenfreien Spalt ergibt sich eine große Magnetkraft. Hierdurch ist der Einsatzbereich des Umschaltventils vergrößert oder konstruktiv eine Verringerung der Magnetspule 3 hinsichtlich Wicklungszahl und Baugröße möglich.

## Patentansprüche

1. Elektromagnetisches Umschaltventil (1) mit einem Magnetanker (9), der in einem Durchlaßkanal (10) beweglich angeordnet ist und Ventilschließkörper für zwei Anschlußkanäle (11,12) bildet, die jeweils einen Ventilsitz (13,14) für die Ventil Schließkörper bilden, wobei der Durchlaßkanal und der Magnetanker durchmessermäßig so abgestimmt sind, daß zwischen ihnen nur ein geringster Spalt besteht und der Magnetanker mehrere in Längsrichtung verlaufende Durchlässe (22) aufweist, und wobei der Magnetanker (9) eine in Längsrichtung verlaufende Ausnehmung (15) aufweist, in die ein Kunststoffkörper (16) eingesetzt ist, dadurch gekennzeichnet daß der Kunststoffkörper in seinem Mittelteil (17) zwei an beiden Stirnflächen herausragenden Elastomerdichtkörper (18, 19) aufweist, wobei das Mittelteil (17) durch Rippen (20), zwischen denen die Durchlässe (22) bestehen, mit einem Außenteil (21) verbunden ist, wobei das Aussenteil (21) in der Ausnehmung (15) aufgenommen ist, und wobei der Durchlaßkanal (10) durch einen Ankerkern (7) begrenzt ist, der den Anschlußkanal (12) aufweist.

## Claims

1. Electromagnetic changeover valve (1) with a magnet armature (9) which is movably arranged in a through-channel (10) and forms valve-closing elements for two connection channels (11, 12) which each form a valve seat (13, 14) for the valve-closing elements, the through-channel and the magnet armature being matched in terms of diameter in such a way that there is only an extremely small gap between them and the magnet armature has a plurality of passages (22) running in the longitudinal direction, and the magnet armature (9) having a recess (15) which runs in the longitudinal direction and into which a plastic element (16) is inserted, characterized in that the plastic element has in its central part (17) two elastomer sealing elements (18, 19) which project out at its two end faces, the central part (17) being connected to an outer part (21) by means of ribs (20) between which the passages (22) are located, the outer part (21) being received in the recess (15), and the through-channel (10) being bounded by an armature core (7) which has the connection channel (12).

## Revendications

1. Soupape électromagnétique d'inversion (1), avec un induit magnétique (9) qui est mobile dans un canal de passage (10) et forme un corps de fermeture de soupape pour deux canaux de raccordement (11, 12), qui forment respectivement un siège de soupape (13, 14) pour les corps de fermeture de soupape, dans laquelle le canal de passage et l'induit magnétique sont, en diamètre, adaptés l'un à l'autre de telle façon qu'il n'existe entr'eux qu'un très petit espace et où l'induit magnétique présente plusieurs passages (22) orientés en direction longitudinale, et dans laquelle l'induit magnétique (9) présente un évidement (15) orienté en direction longitudinale, dans lequel est introduit un corps (16) en matière plastique, caractérisé en ce que le corps en matière plastique présente dans sa partie centrale (17) deux corps d'étanchéité en élastomère (18, 19), saillant dans les deux faces d'extrémité, la partie centrale (17) étant reliée à une partie externe (21) par des nervures (20), entre lesquelles existent les passages (22), la partie externe (21) étant logée dans l'évidement (15), et le canal de passage (10) étant limité par un noyau d'induit (7), qui présente le canal de raccordement (12).
